(19) Europäisches Patentamt / European Patent Office / Office européen des brevets

(11) **EP 4 124 821 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **21188853.2**

(22) Anmeldetag: **30.07.2021**

(51) Internationale Patentklassifikation (IPC):
**G01B 5/00** (2006.01)   **G01B 5/008** (2006.01)

(52) Gemeinsame Patentklassifikation (CPC):
**G01B 5/008; G01B 5/0014;** G01B 21/045

(54) **KOORDINATENMESSGERÄT UND VERFAHREN ZUR TEMPERATURABHÄNGIGEN KORREKTUR VON DIMENSIONELLEN MESSDATEN**

COORDINATE MEASURING DEVICE AND METHOD FOR TEMPERATURE-DEPENDENT CORRECTION OF DIMENSIONAL MEASUREMENT DATA

APPAREIL DE MESURE DE COORDONNÉES ET PROCÉDÉ DE CORRECTION EN FONCTION DE LA TEMPÉRATURE DES DONNÉES DE MESURE DIMENSIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.02.2023 Patentblatt 2023/05**

(73) Patentinhaber: **Carl Zeiss Industrielle Messtechnik GmbH**
**73447 Oberkochen (DE)**

(72) Erfinder:
• **Strauß, Steffen**
  **73432 Aalen-Waldhausen (DE)**
• **Withalm, Martin**
  **89542 Herbrechtingen (DE)**
• **Held, Tobias**
  **86720 Noerdlingen (DE)**
• **Seitz, Dominik**
  **73527 Schwäbisch Gmünd (DE)**
• **Kunzmann, Steffen**
  **01279 Dresden (DE)**

(74) Vertreter: **Witte, Weller & Partner Patentanwälte mbB**
**Postfach 10 54 62**
**70047 Stuttgart (DE)**

(56) Entgegenhaltungen:
DE-A1- 10 138 138     DE-U1-202008 007 949
US-A1- 2010 299 094     US-A1- 2021 191 359

• SCHALZ K J:
"THERMO-VOLLFEHLER-KORREKTUR FUER KOORDINATEN-MESSGERAETE", FEINWERKTECHNIK+MESSTECHNIK, HANSER, MUNCHEN., DE, Bd. 98, Nr. 10, 1. Oktober 1990 (1990-10-01), Seiten 411-414, XP000165961, ISSN: 0340-1952

EP 4 124 821 B1

**Beschreibung**

Die vorliegende Erfindung betrifft ein Koordinatenmessgerät zum dimensionellen Messen eines in einem Messvolumen des Koordinatenmessgeräts befindlichen Messobjekts. Das erfindungsgemäße Koordinatenmessgerät weist einen Messkopf auf, der dazu eingerichtet ist, dimensionelle Messdaten des Messobjekts zu erfassen. Ferner weist das Koordinatenmessgerät eine Führungsstruktur auf, die dazu eingerichtet ist, den Messkopf zu führen und in dem Messvolumen zu bewegen, wobei der Führungsstruktur mindestens ein Messgeber zugeordnet ist, der dazu eingerichtet ist, Stellungsdaten der Führungsstruktur zu erfassen, anhand derer sich eine Pose des Messkopfes berechnen lässt. Des Weiteren weist das Koordinatenmessgerät mehrere Temperatursensoren auf, die dazu eingerichtet sind, Temperaturdaten zu dem Messvolumen zu erfassen. Eine Auswerte- und Steuereinheit des Koordinatenmessgeräts ist dazu eingerichtet, die dimensionellen Messdaten und die Stellungsdaten zu verarbeiten und die dimensionellen Messdaten und/oder die Stellungsdaten anhand der Temperaturdaten zu korrigieren.

Die vorliegende Erfindung betrifft zudem ein entsprechendes Verfahren zur Korrektur von dimensionellen Messdaten eines Koordinatenmessgeräts, das einen Messkopf zur Erfassung der dimensionellen Messdaten, eine Führungsstruktur zum Bewegen und Führen des Messkopfes, wobei der Führungsstruktur mindestens ein Messgeber zugeordnet ist, der dazu eingerichtet ist, Stellungsdaten der Führungsstruktur zu erfassen, anhand derer sich eine Pose des Messkopfes berechnen lässt, und mehrere Temperatursensoren zum Erfassen von Temperaturdaten aufweist.

Ferner betrifft die vorliegende Erfindung ein Computerprogrammprodukt, das einen Softwarecode aufweist, der dazu eingerichtet ist, bei Ausführung auf einem Computer das erfindungsgemäße Verfahren auszuführen.

Koordinatenmessgeräte dienen dazu, bspw. im Rahmen einer Qualitätssicherung, Werkstücke zu überprüfen oder die Geometrie eines Werkstücks vollständig im Rahmen eines sog. "Reverse Engineering" zu ermitteln. Darüber hinaus sind vielfältige weitere Anwendungsmöglichkeiten denkbar, wie z.B. auch prozesssteuernde Anwendungen, bei denen die Messtechnik direkt zur Online-Überwachung und -Regelung von Fertigungs- und Bearbeitungsprozessen angewendet wird.

In Koordinatenmessgeräten können verschiedene Arten von Sensoren zur Anwendung kommen, um das zu vermessende Objekt (Messobjekt) zu erfassen. Diese Sensoren sind typischerweise an einem Messkopf des Koordinatenmessgeräts angeordnet. An diesem Messkopf sind neben den eigentlichen Sensoren auch die dazugehörigen Tastelemente angebracht. Je nach Art des Sensors kann es sich bei diesen Tastelementen bspw. um einen oder mehrere taktile Taststifte oder optische Elemente eines optischen Messsensors handeln.

Bei taktilen Messsensoren wird das Messobjekt an mehreren definierten Punkten taktil angetastet. Optische Sensoren ermöglichen dagegen eine berührungslose Erfassung der Koordinaten eines Messobjekts. Zudem gibt es sog. Multisensorsysteme, bei denen mehrere taktile und/oder optische Sensoren gemeinsam verwendet werden.

Aus dem Stand der Technik bekannte Koordinatenmessgeräte weisen typischerweise zumindest drei translatorische Bewegungsfreiheitsgrade auf, die durch eine Verfahrbarkeit der Führungsstruktur des Koordinatenmessgeräts realisiert sind. Diese Führungsstruktur dient der Führung und Bewegung des Messkopfes und/oder des Messobjektes.

Unter der Führungsstruktur des Koordinatenmessgeräts wird vorliegend der gesamte Aufbau des Koordinatenmessgeräts verstanden, der der Verfahrbarkeit des Messkopfes relativ zu dem Messobjekt dient. Je nach Bauweises des Koordinatenmessgeräts kann hierzu ein verfahrbarer Messtisch, einer oder mehrere Auslegerarme, an dem bzw. denen der Messkopf befestigt ist, eine Brücke, mittels derer der Messkopf verfahrbar ist, ein Portal oder ein Ständer mit daran beweglich montiertem Horizontalarm gehören. Zur weiteren Steigerung der Bewegungsfreiheit bzw. Variabilität des Koordinatenmessgerätes können selbstverständlich weitere Komponenten an der zum Verfahr- bzw. Positioniersystems des Koordinatenmessgeräts gehörenden Führungsstruktur angebracht sein. Um weitere Freiheitsgrade zu ermöglichen, können bspw. weitere Gelenke vorgesehen sein, die eine Rotation des Messkopfes um eine oder mehrere Drehachsen ermöglichen.

Es sei darauf hingewiesen, dass der Begriff "Koordinatenmessgerät" im vorliegenden Sinne weit auszulegen ist, so dass jedes Messgerät, das der dimensionellen Messung und Erfassung räumlicher Koordinaten eines Messobjekts dient, als Koordinatenmessgerät im erfindungsgemäßen Sinne aufzufassen ist. Alternativ zu den konventionellen Bauarten (Auslegerbauweise, Brückenbauweise, Portalbauweise und Ständerbauweise) lässt sich der Messkopf bspw. auch an einem Ende eines Roboterarms, bspw. eines Knickarmroboters, befestigen, um ein Koordinatenmessgerät zu realisieren.

Die hohen Präzisionsanforderungen, welche in der Praxis an Koordinatenmessgeräte gestellt werden, haben mit den Jahren dazu geführt, dass deren Messgenauigkeit durch diverse Entwicklungen stetig erhöht werden konnte. So liegt die Messgenauigkeit einiger Koordinatenmessgeräte aus dem Stand der Technik mittlerweile bei wenigen Zehntel-Mikrometern oder sogar darunter.

Es ist leicht nachvollziehbar, dass in diesem Messgenauigkeitsbereich äußere Umwelteinflüsse Störfaktoren bilden, die die Messgenauigkeit negativ beeinflussen. Unter Laborbedingungen lassen sich Umwelteinflüsse, wie bspw. äußerlich einwirkende Kräfte oder Temperaturveränderungen, weitestgehend minimieren. Bei einer produktionsnahen Verwendung des Koordinatenmessgeräts ist dies allerdings um ein Vielfaches schwieriger zu realisieren.

Im Stand der Technik gibt es bereits diverse Ansätze derartige äußere Störeinflüsse in Koordinatenmessgeräten rechnerisch zu kompensieren.

Aus der DE 195 18 268 A1 ist bspw. ein Verfahren bekannt, bei dem das elastische Biegeverhalten des Koordinatenmessgeräts durch entsprechende Korrekturwerte berücksichtigt wird. Das elastische Biegeverhalten wird darin durch eine Deformationsmatrix nachgebildet. Dieses Verfahren ermöglicht eine Korrektur der Deformationen innerhalb des Koordinatenmessgeräts, die insbesondere bei taktilen Antastungen aufgrund der Messkraft und/oder aufgrund anderer äußerer Kräfte während einer Messung auf das Koordinatenmessgerät einwirken.

Aus der DE 100 06 753 A1 ist eine Dreh-Schwenkeinrichtung für einen Mess- bzw. Tastkopf eines Koordinatenmessgerätes bekannt. Der Korrektureinrichtung sind Korrekturwerte zugeordnet, mit denen Fehler aufgrund elastischer Verformung bei der Messung korrigiert werden. Zur Verbesserung der Messergebnisse wird ein mathematisches Modell verwendet, das mindestens ein finites Element umfasst. Das (einzelne) theoretisch gedachte finite Element verbindet mehrere mechanische Elemente. Die unbekannten Parameter des finiten Elementes werden durch eine Vielzahl von Messungen und eine Einpassung mittels der Methode der kleinsten Quadrate bestimmt.

Temperatureinflüsse, die ebenfalls zu Deformationen der Führungsstruktur und/oder des Messkopfes eines Koordinatenmessgerätes führen können, bleiben in den beiden zuletzt genannten Verfahren jedoch unberücksichtigt. Diese spielen in der Praxis allerdings eine immer größere Rolle. Beispielsweise gibt es Bestrebungen, die Bauteile der Führungsstruktur, welche zumeist aus Keramik, bspw. einer AluminiumoxidKeramik hergestellt sind, aus vergleichsweise günstigeren Werkstoffen, wie bspw. Aluminium, herzustellen. Hiervon erhoffen sich Hersteller ein großes Einsparungspotential bei den Herstellungskosten.

Nachteilig bei der Verwendung von Aluminium oder anderen vergleichsweise günstigeren Werkstoffen ist jedoch deren geringere Steifigkeit sowie deren höherer Temperaturausdehnungskoeffizient im Vergleich zu den bisher häufig verwendeten keramischen Werkstoffen. Um trotzdem den hohen Messgenauigkeitsanforderungen gerecht zu werden, ist daher ein rechnerischer Ausgleich notwendig, der die temperaturbedingten Verformungen der Führungsstruktur des Koordinatenmessgeräts berücksichtigt. Ein solcher rechnerischer Ausgleich temperaturbedingter Deformationen wird umso wichtiger, wenn das Koordinatenmessgerät direkt in einer Fertigungsumgebung eingesetzt werden soll, in der sich die "idealen" Laborbedingungen nicht realisieren lassen.

Aus der WO 00/14474 A1 ist ein Koordinatenmessgerät bekannt, bei dem die temperaturbedingten Einflüsse auf die Deformationen einzelner Bauteile des Koordinatenmessgerätes durch ein mathematisches Modell berücksichtigt werden. Das darin vorgeschlagene mathematische Modell ist jedoch sehr einfach ausgestaltet, um insbesondere den Rechenaufwand für die genannte Ausgleichskorrektur überschaubar zu halten. Letztendlich berücksichtigt dieses Modell die temperaturbedingte Verformung einzelner Maschinenachsen näherungsweise mit Hilfe von trivialen linearen Zusammenhängen, die jeweils die Verformung der betrachteten Achse separat beschreiben. Eine Wechselwirkung dieser Achsverformungen unter den diversen Achsen des Koordinatenmessgeräts wird hier jedoch nicht oder zumindest nicht ausreichend berücksichtigt.

K. J. Schalz: "Thermo-Vollfehler-Korrektur für Koordinaten-Meßgeräte", in Feinwerktechnik & Messtechnik 98 (1990), 10 offenbart ebenfalls ein Verfahren zur Kompensation von Messfehlern, die sich aufgrund von temperaturbedingten geometrischen Deformationen an einem Koordinatenmessgerät ergeben. Die thermischen Fehler werden hier indirekt aus der Temperaturverteilung des Koordinatenmessgeräts bestimmt, die mit mehreren Sensoren erfasst wird. Aus der gemessenen Temperaturverteilung und einer Rechenvorschrift werden dann die entsprechenden Deformationen anhand zweier Matrizen berechnet. Die erste der beiden Matrizen wird als DeformationsMatrix bezeichnet, deren Koeffizienten nur von der Gerätegeometrie und der Lage der Temperaturfühler am Koordinatenmessgerät abhängen. Die zweite der beiden Matrizen wird als Fehlerfunktions-Matrix bezeichnet, deren Koeffizienten nur messpositionsabhängig sind. Wenngleich sich bei den laut diesem Dokument durchgeführten Versuchen angeblich ein hoher thermischer Kompensationsgrad durch das darin erwähnte Rechenmodell realisieren lässt, hat sich dieses Verfahren in der Praxis jedoch nicht durchgesetzt.

Weitere beispielhafte Systeme und Verfahren zur Korrektur temperaturbedingter Deformationen in Koordinatenmessgeräten sind aus der US 2021/191359 A1, der DE 101 38 138 A1 und der US 2010/299094 A1 bekannt. Die DE 20 2008 007 949 U1 offenbart ferner eine Vorrichtung zur Messung und Kartographie mittels Ultraschall.

Vor diesem Hintergrund ist es eine Aufgabe der vorliegenden Erfindung ein Koordinatenmessgerät sowie ein entsprechendes Verfahren und ein Computerprogrammprodukt bereitzustellen, mit dem sich die temperaturbedingten Verformungen der Führungsstruktur und/oder des Messkopfes des Koordinatenmessgeräts rechnerisch noch besser ausgleichen lassen.

Gemäß einem ersten Aspekt der vorliegenden Erfindung wird diese Aufgabe durch ein Koordinatenmessgerät der eingangs genannten Art dadurch gelöst, dass die Auswerte- und Steuereinheit des Koordinatenmessgeräts dazu eingerichtet ist, die dimensionellen Messdaten und die Stellungsdaten zu verarbeiten und die dimensionellen Messdaten und/oder die Stellungsdaten anhand der Temperaturdaten zu korrigieren, indem an einer Vielzahl von definierten Punkten innerhalb des Messvolumens eine temperaturbedingte Verformung des Messkopfes und/oder der Führungsstruktur berechnet wird, wobei bei der Berechnung für jeden der Vielzahl von definierten Punkten temperaturbedingte Zustandsänderungen anhand von thermoelastischen Koeffizienten berechnet werden, die die Auswirkungen der Temperaturdaten auf drei translatorische Freiheitsgrade und drei rotatorische Freiheitsgrade in dem jeweiligen Punkt definieren, wobei jedem der Vielzahl von definierten Punkten ein thermoelastischer Koeffizient pro Freiheitsgrad und Temperaturdifferenz, die aus den Temperaturdaten ermittelt wird, zugeordnet ist, und wobei die Auswerte- und Steuereinheit dazu eingerichtet ist, die temperaturbedingte Verformung der Führungsstruktur unter mathematischer Einbeziehung eines kinematischen Modells der Führungsstruktur zu berechnen, wobei das kinematische Modell die Führungsstruktur als ein mechanisches System modelliert, das aus mehreren starren Körpern, die über jeweils einen elastischen Knoten miteinander verbunden sind, aufgebaut ist, wobei die Knoten des kinematischen Modells in den definierten Punkten angeordnet sind.

Gemäß einem zweiten Aspekt der vorliegenden Erfindung wird die oben genannte Aufgabe durch ein Verfahren der eingangs genannten Art dadurch gelöst, dass dieses die folgenden Schritte aufweist:

- Berechnen einer temperaturbedingten Verformung des Messkopfes und/oder der Führungsstruktur an einer Vielzahl von definierten Punkten innerhalb des Messvolumens, wobei bei der Berechnung für jeden der Vielzahl von definierten Punkten temperaturbedingte Zustandsänderungen anhand von thermoelastischen Koeffizienten berechnet werden, die die Auswirkungen der Temperaturdaten auf drei translatorische Freiheitsgrade und drei rotatorische Freiheitsgrade in dem jeweiligen Punkt definieren, wobei jedem der Vielzahl von definierten Punkten ein thermoelastischer Koeffizient pro Freiheitsgrad und Temperaturdifferenz, die aus den Temperaturdaten ermittelt wird, zugeordnet ist, und die temperaturbedingte Verformung der Führungsstruktur unter mathematischer Einbeziehung eines kinematischen Modells der Führungsstruktur berechnet wird, wobei das kinematische Modell die Führungsstruktur als ein mechanisches System modelliert, das aus mehreren starren Körpern, die über jeweils einen elastischen Knoten miteinander verbunden sind, aufgebaut ist, wobei die Knoten des kinematischen Modells in den definierten Punkten angeordnet sind, und

- Korrigieren der dimensionellen Messdaten und/oder der Stellungsdaten auf Basis der temperaturbedingten Verformung des Messkopfes und/oder der Führungsstruktur.

Ferner wird die oben genannte Aufgabe gemäß einem weiteren Aspekt durch ein Computerprogrammprodukt gelöst, das einen Softwarecode aufweist, der dazu eingerichtet ist, bei Ausführung auf einem Computer das erfindungsgemäße Verfahren auszuführen.

Es versteht sich, dass sich die in den abhängigen Ansprüchen definierten Merkmale und die in der nachfolgenden Beschreibung erwähnten Ausgestaltungsmöglichkeiten nicht nur auf das erfindungsgemäße Koordinatenmessgerät, sondern auch in entsprechender Art und Weise auf das erfindungsgemäße Verfahren und das erfindungsgemäße Computerprogrammprodukt beziehen. Der Einfachheit halber werden daher im Folgenden die Ausgestaltungsmöglichkeiten im Wesentlichen in Bezug auf das erfindungsgemäße Koordinatenmessgerät erläutert, ohne dabei die entsprechenden Merkmale nochmals als äquivalente Verfahrensmerkmale explizit aufzuführen.

Aufgrund der Tatsache, dass die Auswerte- und Steuereinheit des erfindungsgemäßen Koordinatenmessgerätes die temperaturbedingte Verformung der Führungsstruktur und/oder des Messkopfes in einer Vielzahl von definierten Punkten anhand von thermoelastischen Koeffizienten berücksichtigt, die die temperaturbedingten Auswirkungen auf alle drei translatorischen Freiheitsgrade und alle drei rotatorischen Freiheitsgrade für jeden dieser Punkte separat definieren, lässt sich die Präzision dieses rechnerischen Ausgleichs der temperaturbedingten Verformungen der Führungsstruktur und/oder des Messkopfes im Vergleich zu den zuvor erwähnten Verfahren um ein Vielfaches erhöhen.

Statt der separaten Betrachtung der Verformung einzelner Achsen des Koordinatenmessgeräts werden bei dem erfindungsgemäßen Ansatz zunächst mehrere Punkte im Messvolumen festgelegt, wobei für jeden dieser Punkte rechnerisch betrachtet wird, wie sich die von den Temperatursensoren gemessenen Temperaturdaten auf die Verformungen entlang aller sechs Freiheitsgrade in diesem Punkt auswirken. Anders als bei den zuvor beschriebenen Ansätzen ist das hier vorgestellte Rechenmodell also wesentlich granularer und führt damit zu einem verbesserten rechnerischen Ausgleich, der die in der Realität auftretenden, temperaturbedingten Verformungen sehr exakt abbildet.

Erfindungsgemäß wird jedem der Vielzahl von definierten Punkten ein thermoelastischer Koeffizient pro Freiheitsgrad und Temperaturdifferenz, die aus den Temperaturdaten ermittelt wird, zugeordnet. Dementsprechend ergibt sich die Anzahl der insgesamt berücksichtigten thermoelastischen Koeffizienten durch Multiplikation der Freiheitsgrade, also sechs, mit der Anzahl der Temperatursensoren und der Anzahl der betrachteten Punkte. Selbstverständlich kann einer oder mehrere der thermoelastischen Koeffizienten in den einzelnen Punkten den Wert "0" aufweisen, wenn bspw. festgestellt wird, dass die Temperatur in dem jeweiligen Punkt keine Auswirkungen auf die Verformung entlang eines bestimmten Freiheitsgrades hat.

Die thermoelastischen Koeffizienten können im Vorfeld durch Berechnung anhand eines Wärmeausdehnungskoeffizienten eines Materials der Führungsstruktur und/oder des Messkopfes, durch Messung von Verformungen der Führungsstruktur und/oder des Messkopfes unter mehreren Temperaturbedingungen und/oder mit Hilfe einer FEM-Simulation der Führungsstruktur und/oder des Messkopfes in einem Kalibrierschritt bestimmt werden.

Beispielsweise erfolgt die Bestimmung der thermoelastischen Koeffizienten durch Berechnung mittels vereinfachter linearer Gleichungen, die wie folgt lauten können: Verformung = Abstand bzw. Länge x Wärmeausdehnungskoeffizient b'.

Gemäß einer Ausgestaltung ist die Auswerte- und Steuereinheit dazu eingerichtet, die Zustandsänderungen in jedem der Vielzahl von definierten Punkten mithilfe einer thermoelastischen Matrix zu berechnen, die die thermoelastischen Koeffizienten enthält und die Dimension m x n hat, wobei m der Anzahl an Freiheitsgraden entspricht und n der Anzahl an Temperaturdifferenzen entspricht, oder wobei m der Anzahl an Temperaturdifferenzen entspricht und n der Anzahl an Freiheitsgraden entspricht. Bei dieser thermoelastischen Matrix handelt es sich um einen Tensor. Der Zusatz "thermoelastische" soll jedoch keine spezielle Art der Matrix implizieren, sondern lediglich zur eindeutigen Identifizierung dieser Matrix dienen, insbesondere da im Folgenden noch weitere Arten von Matrizen verwendet werden.

Erfindungsgemäß wird also jedem Punkt eine solche thermoelastische Matrix zugeordnet, welche die bereits erwähnten thermoelastischen Koeffizienten enthält. Selbstverständlich ließen sich die thermoelastischen Koeffizienten auch in einer anderen mathematischen Nomenklatur definieren. Die Matrix-Schreibweise erleichtert allerdings die mathematische Beschreibung der der Rechnung zugrunde liegenden linearen Gleichungssysteme.

Die Auswerte- und Steuereinheit ist vorzugsweise dazu eingerichtet, die Zustandsänderungen in jedem der Vielzahl von definierten Punkten durch Multiplikation der dem jeweiligen Punkt entsprechenden thermoelastischen Matrix mit einem Zustandsvektor zu berechnen, der dem jeweiligen Punkt entsprechende, aus den Temperaturdaten ermittelte Temperaturdifferenzen aufweist, wobei die Anzahl der in dem Zustandsvektor enthaltenen Temperaturdifferenzen größer oder gleich der Anzahl der Temperatursensoren ist.

Vorzugsweise entspricht die Anzahl der in dem Zustandsvektor enthaltenen Temperaturdifferenzen der Anzahl an Temperatursensoren. Auf diese Weise wird jedem Punkt pro Temperatursensor ein Temperaturdifferenzwert zugeordnet, der sich für den jeweiligen Punkt aus den Daten des entsprechenden Temperatursensors ergibt.

Es ist jedoch auch möglich, dass die Anzahl der in dem Zustandsvektor enthaltenen Temperaturdifferenzen größer als die Anzahl an Temperatursensoren ist. Beispielsweise handelt es sich bei einen oder mehreren der in dem Zustandsvektor enthaltenen Temperaturdifferenzen um Temperaturdifferenzen eines "virtuellen" Sensors. Ein solcher virtueller Sensor lässt sich durch Umrechnung der Sensordaten eines tatsächlich vorhandenen Sensors mathematisch erzeugen. Hierdurch lässt sich eine Temperatur an einem Ort, an dem kein tatsächlicher Sensor vorhanden ist, abschätzen. Beispielsweise lässt sich dies durch Verwendung einer entsprechenden mathematischen Operation aus den Sensordaten eines tatsächlichen Temperatursensors erzeugen. Ein Beispiel hierfür ist die Filterung der Werte eines von einem Temperatursensor gemessenen Temperatursignals mit Hilfe eines digitalen Filters, der eine Signalverzögerung simuliert.

Durch derartige virtuelle Temperatursensoren lässt sich die Genauigkeit des Verfahrens erhöhen, ohne dass hierfür Kosten für weitere, tatsächlich vorhandene Temperatursensoren aufgebracht werden müssen.

Die in dem Zustandsvektor enthaltenen Temperaturdifferenzen können bspw. aus einer Differenz einer von einem der Temperatursensoren gemessenen Temperatur zu einer definierten Bezugstemperatur, z.B. 20 °C berechnet werden.

Ferner kann es sich bei den Temperaturdifferenzen jeweils um eine Differenz einer von einem der Temperatursensoren gemessenen Temperatur zu einer von einem anderen der Temperatursensoren gemessenen Temperatur handeln. Die Temperaturdifferenz stellt in diesem Fall also einen Raumgradienten dar, der das Delta zwischen den von zwei unterschiedlichen Temperatursensoren gemessenen Temperaturen angibt.

Eine weitere Möglichkeit besteht darin, dass die Temperaturdifferenzen jeweils einen zeitlichen Gradienten einer von einem der Temperatursensoren gemessenen Temperatur aufweisen.

Eine weitere Möglichkeit besteht darin, dass die Temperaturdifferenzen einen zeitlichen Gradienten einer Differenz einer von einem der Temperatursensoren gemessenen Temperatur zu einer von einem anderen der Temperatursensoren gemessenen Temperatur aufweist. In diesem Fall handelt es sich also um einen zeitlichen Gradienten von dem zuvor genannten Raumgradienten.

Wie bereits erwähnt, besteht ferner die Möglichkeit, dass die Temperaturdifferenzen einen gefilterten Wert eines von einem der Temperatursensoren gemessenen Temperatursignals aufweisen. Dies entspricht dem oben beschriebenen Modell eines virtuellen Temperatursensors.

Selbstverständlich können die oben genannten Varianten auch gemeinsam in einem Zustandsvektor enthalten sein. Das heißt mit anderen Worten, dass bspw. eine in dem Zustandsvektor enthaltene erste Temperaturdifferenz eine Differenz einer von einem der Temperatursensoren gemessenen Temperatur zu einer definierten Bezugstemperatur ist, während eine zweite in dem Zustandsvektor enthaltene Temperaturdifferenz ein zeitlicher Gradient einer von einem der Temperatursensoren gemessenen Temperatur ist. Hierbei sind beliebige Kombinationen von Temperaturdifferenzen möglich, wobei lediglich die in der thermoelastischen Matrix enthaltenen thermoelastischen Koeffizienten auf die entsprechende Art der Temperaturdifferenzen angepasst sein müssen.

Gemäß einer weiteren Ausgestaltung weist die thermoelastische Matrix weitere Werte auf, die aus einem Zustand und/oder einer Leistung einer oder mehrerer Wärmequellen abgeleitet sind.

Diese können zusätzlich zu den thermoelastischen Koeffizienten als weitere Modelleingangsgrößen der Matrix verwendet werden, um die Genauigkeit der temperaturbedingten Korrektur weiter zu erhöhen.

Erfindungsgemäß ist es vorgesehen, dass die Auswerte- und Steuereinheit dazu eingerichtet ist, die temperaturbedingte Verformung der Führungsstruktur und/oder des Messkopfes unter mathematischer Einbeziehung eines kinematischen Modells zu berechnen.

Als eine Alternative zur Verwendung eines solchen kinematischen Modells ist es grundsätzlich auch möglich, die definierten Punkte, in denen die thermoelastischen Verformungen jeweils entlang der sechs Freiheitsgrade betrachtet werden, in einem beliebigen Volumenmodell innerhalb des Messvolumens zu wählen. Da, wie erwähnt, jedem der Punkte eine thermoelastische Matrix mit einer Vielzahl von thermoelastischen Koeffizienten erfindungsgemäß zugeordnet wird, führt dies jedoch zu einer Vervielfachung der Koeffizienten und damit zu einem relativ hohen Rechenaufwand. Die mathematische Einbeziehung eines kinematischen Modells der Führungsstruktur und/oder des Messkopfes bietet hingegen die Möglichkeit, die Anzahl der definierten Punkte drastisch zu reduzieren, ohne dass dabei die Genauigkeit der temperaturbedingten Korrektur allzu stark beeinträchtigt wird.

Das kinematische Modell modelliert die Führungsstruktur und/oder den Messkopf als ein mechanisches System, das aus mehreren starren Körpern aufgebaut ist, die über jeweils einen elastischen Knoten miteinander verbunden sind. Die Knoten des kinematischen Modells sind in den definierten Punkten angeordnet. Sie fallen also mit den definierten Punkten zusammen. Oder anders ausgedrückt: Die Punkte, in denen die temperaturbedingte Verformung jeweils entlang der sechs Freiheitsgrade berechnet wird, werden in den Knoten des kinematischen Modells gewählt.

Das kinematische Modell weist vorzugsweise mechanische Operatoren auf, die Rotationen und Translationen von in den Knoten angeordneten Ortskoordinatensystemen als kinematische Kette definieren. Diese mathematischen Operatoren weisen vorzugsweise Vektoren und/oder Matrizen auf, wobei die Auswerte- und Steuereinheit dazu eingerichtet ist, die Vektoren und/oder Matrizen mit der thermoelastischen Matrix zu multiplizieren. Dies ermöglicht, trotz der Komplexität des Gesamtsystems, eine vergleichsweise einfache Art der Berechnung der thermischen Verformung der Führungsstruktur und/oder des Messkopfes des Koordinatenmessgerätes. Der hierfür benötigte Rechenaufwand ist vergleichsweise gering.

Die Berechnung der in dem kinematischen Modell definierten kinematischen Kette erfolgt vorzugsweise anhand der Denavit-Hartenberg-Transformation, welche insbesondere in der Robotik für derartige Anwendungen häufig verwendet wird.

Die Knoten des kinematischen Modells modellieren vorzugsweise Teile der Führungsstruktur und/oder des Messkopfes, besonders bevorzugt Verbindungsstellen von Bauteilen der Führungsstruktur bzw. des Messkopfes. Die Knoten werden bspw. zur Modellierung eines oder mehrerer Gelenke verwendet, die zwei verschiedene Bauteile gelenkig miteinander verbinden und ein oder mehrere Freiheitsgrade aufweisen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, da der Schutzumfang der vorliegenden Erfindung nur durch die anhängigen Patentansprüche limitiert ist.

Ein Ausführungsbeispiel der vorliegenden Erfindung ist in den Zeichnungen dargestellt und wird in der nachfolgenden Beschreibung näher erläutert. Es zeigen:

Fig. 1    eine schematische Ansicht eines Koordinatenmessgeräts gemäß einem Ausführungsbeispiel der vorliegenden Erfindung;

Fig. 2    einen Teil einer Führungsstruktur des in Fig. 1 gezeigten Koordinatenmessgerätes in einer schematischen Ansicht zur Erläuterung eines kinematischen Modells, wobei Fig. 2a die Führungsstruktur in einer beispielhaften ersten Stellung und Fig. 2b die Führungsstruktur in einer beispielhaften zweiten Stellung zeigt; und

Fig. 3    ein Ablaufdiagramm zur Veranschaulichung eines Ausführungsbeispiels des erfindungsgemäßen Verfahrens.

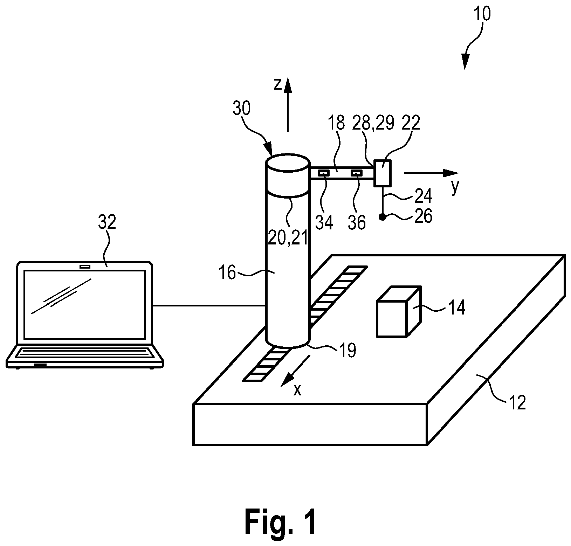

Fig. 1 zeigt ein Ausführungsbeispiel eines erfindungsgemäßen Koordinatenmessgerätes in einer schematischen, perspektivischen Ansicht. Das Koordinatenmessgerät ist darin in seiner Gesamtheit mit der Bezugsziffer 10 gekennzeichnet.

Das in Fig. 1 gezeigte Koordinatenmessgerät 10 ist zur Veranschaulichung der vorliegenden Erfindung in vereinfachter Form dargestellt. Die Bauweise des Koordinatenmessgerätes 10 ist keineswegs als einschränkend anzusehen. Das Koordinatenmessgerät 10 kann auch in beliebigen anderen Bauweisen ausgeführt sein, bspw. in Brücken-, Ständer- oder Portalbauweise.

Das in Fig. 1 gezeigte Koordinatenmessgerät 10 weist einen Messtisch 12 auf, auf dem ein zu vermessendes Objekt 14 (Messobjekt) platziert werden kann. Bei dem Messtisch 12 kann es sich bspw. um eine massive Granitplatte handeln.

Auf dem Messtisch 12 ist ein Ständer 16 in x-Richtung verfahrbar angeordnet. Der Ständer 16 ragt in z-Richtung senkrecht von dem Messtisch 12 nach oben hin ab.

An dem oberen Ende des Ständers 16 ist ein Auslegerarm 18 angebracht, der in der in Fig. 1 gezeigten Stellung in y-Richtung von dem Ständer 16 abragt. Der Auslegerarm 18 ist mittels eines Drehgelenks 20 relativ zu dem Ständer 16 um die z-Achse drehbar gelagert. An dem vorderen, freien Ende des Auslegerarms 18 ist ein Messkopf 22 angeordnet. Der Messkopf 22 dient der Erfassung dimensioneller Messdaten des Messobjekts 14. Der Messkopf 22 ist in dem in Fig. 1 gezeigten Ausführungsbeispiel mittels eines zweiten Drehgelenks 28 um die y-Achse relativ zu dem Auslegerarm 18 drehbar.

Der Messkopf 22 weist einen Taststift 24 auf, an dessen freien Ende eine Tastkugel 26 angeordnet ist. Die Tastkugel 26 ist typischerweise aus Rubin. Selbstverständlich können an dem Messkopf 22 auch mehrere solcher Taststifte 24 angeordnet sein. Der Taststift 24 ist typischerweise lösbar an dem Messkopf 22 angeordnet, so dass je nach Messaufgabe ein geeigneter Taststift 24 verwendbar ist.

Anstelle eines taktilen Messkopfes 22 lässt sich selbstverständlich auch ein optischer Messkopf an dem Koordinatenmessgerät 10 einsetzen, der das Messobjekt 14 optisch abtastet.

Im Falle eines wie hier gezeigten taktilen Messkopfes 22 wird das Messobjekt 14 während einer Messung an einer Vielzahl von Punkten mit Hilfe der Tastkugel 26 angetastet. Der Messtisch 12, der Ständer 16 und der Auslegerarm 18 bilden dabei Teile einer Führungsstruktur 30 mit Hilfe derer der Messkopf 22 und das Messobjekt 14 relativ zueinander innerhalb des Messvolumens des Koordinatenmessgerätes 10 bewegt werden.

Die Bewegung der Führungsstruktur 30 wird während der Messung mithilfe mehrerer Messgeber 19, 21, 29 erfasst. Diese Messgeber 19, 21, 29 erfassen Stellungsdaten, anhand derer sich die Pose des Messkopfes 22 zu jedem Zeitpunkt berechnen lässt. Die Berechnung erfolgt in einer Auswerte- und Steuereinheit 32.

Bei den Messgebern 19, 21, 29 handelt es sich um Sensoren, die typischerweise an den einzelnen Achsen des Koordinatenmessgerätes 10 angebracht sind und die Verschiebungen und Verdrehungen der Achsen messen. Die Messgeber 19, 21, 29 können als Maßverkörperungen ausgestaltet sein. Beispielsweise ist der Messgeber 19 in dem vorliegend gezeigten Ausführungsbeispiel als lineare Maßverkörperung ausgestaltet, die dazu eingerichtet ist, die Verschiebung des Ständers 16 entlang der x-Achse zu messen. Die Messgeber 21 und 29 weisen hingegen jeweils einen Drehmessgeber auf, der die Rotationen um die z- bzw. y-Achse misst.

Die während einer Messung von dem Messkopf 22 erfassten Messdaten werden zusammen mit den von den Messgebern 19, 21, 29 erfassten Stellungsdaten in der Auswerte- und Steuereinheit 32 ausgewertet. Die Auswerte- und Steuereinheit 32 bestimmt aus den erfassten Stellungsdaten und Messdaten die räumlichen Koordinaten der Antastpunkte am Messobjekt 14. Die Auswerte- und Steuereinheit 32 kann bspw. dazu eingerichtet sein, aus diesen räumlichen Koordinaten ein Modell des Messobjektes 14 zu erstellen und/oder die erfassten Stellungsdaten und Messdaten mit entsprechenden Prüfdaten abzugleichen, um festzustellen, ob die Form des Messobjektes 14 einer gewünschten Form entspricht. Typischerweise dient die Auswerte- und Steuereinheit 32 auch der Steuerung der Führungsstruktur 30 zur Bewegung des Messkopfes 22. Sie weist vorzugsweise einen Computer auf, auf dem eine entsprechende Messsoftware hinterlegt ist, mit Hilfe derer der Messablauf automatisiert oder durch einen Bediener manuell gesteuert durchgeführt werden kann.

Das erfindungsgemäße Koordinatenmessgerät 10 weist ferner mehrere Temperatursensoren 34, 36 auf, die dazu eingerichtet sind, Temperaturdaten zu dem Messvolumen zu erfassen. In dem vorliegend gezeigten Ausführungsbeispiel sind zwei Temperatursensoren 34, 36 vorgesehen, die an dem Auslegerarm 18 angeordnet sind. Die Temperatursensoren 34, 36 können bspw. als NTC-Thermistoren oder als PTC-Thermistoren ausgestaltet sein. Alternativ dazu können die Temperatursensoren 34, 36 andere resistive Temperaturfühler, Faser-Bragg-Gitter oder optische Temperaturmesssensoren aufweisen.

Die Auswerte- und Steuereinheit 32 ist dazu eingerichtet, die von dem Messkopf 22 erfassten Messdaten und die von den Messgebern 19, 21, 29 erfassten Stellungsdaten auszuwerten und die Messdaten und/oder die Stellungsdaten anhand der von den Temperatursensoren 34, 36 gelieferten Temperaturdaten zu korrigieren. Die Auswerte- und Steuereinheit 32 führt also eine rechnerische Korrektur durch, mittels derer temperaturbedingte Verformungen des Messkopfes 22 und/oder der Führungsstruktur 30 ausgeglichen werden, um die Messgenauigkeit zu erhöhen.

Typischerweise ist die temperaturbedingte Verformung der Führungsstruktur 30 allein aufgrund ihrer Größe um ein Vielfaches höher als die temperaturbedingte Verformung des Messkopfes 22, weshalb in dem folgenden Rechenbeispiel insbesondere auf die temperaturbedingte Verformung der Führungsstruktur 30 eingegangen wird. Es versteht sich jedoch, dass sich mit dem erfindungsgemäßen Verfahren in äquivalenter Art und Weise auch die temperaturbedingte Verformung des Messkopfes 22 berechnen lässt.

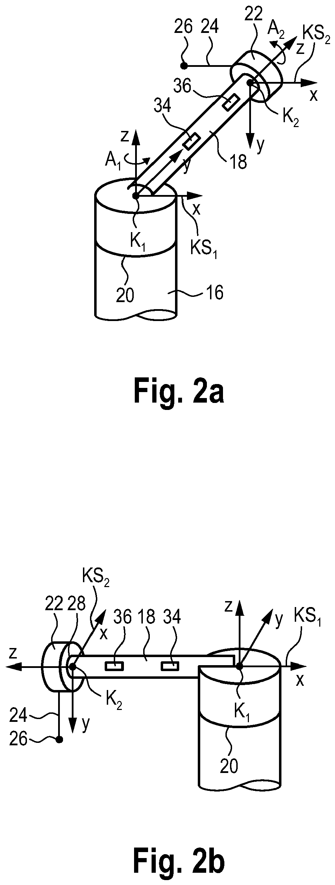

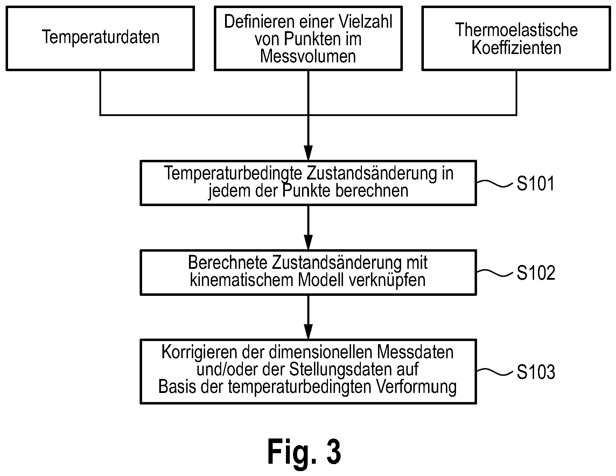

Ein Beispiel für ein derartiges Korrekturverfahren wird im Folgenden anhand der in Fig. 2 gezeigten schematischen Skizzen und des in Fig. 3 dargestellten Ablaufdiagramms erläutert. Zur besseren Nachvollziehbarkeit handelt es sich bei dem nachfolgend erläuterten Beispiel um ein vereinfachtes Rechenbeispiel für eine solche Korrekturrechnung.

Für die Berechnung wird zunächst eine Vielzahl von Punkten im Messvolumen definiert, in denen die temperaturbedingte Verformung der Führungsstruktur 30 berechnet wird. In dem in Fig. 2a und 2b schematisch gezeigten, vereinfachten Modell zur Berechnung der Verformung des oberen Teils der Führungsstruktur 30, sind dies die Punkte $K_1$ und $K_2$, welche die Enden des Auslegerarms 18 bilden. Diese Punkte $K_1$ und $K_2$ dienen auch als Knotenpunkte eines kinematischen Modells, mit Hilfe dessen die Kinematik dieses Teils der Führungsstruktur 30 des Koordinatenmessgeräts 10 modelliert wird. In dem der Anschaulichkeit wegen stark vereinfachten Beispiel aus Fig. 2a und 2b ist eine Matrix N dem Knoten $K_1$ zugeordnet, die die Verformung zwischen den gewählten Punkten (bzw. Knoten) $K_1$ und $K_2$ beschreibt. Es versteht sich jedoch, dass in der Praxis typischerweise mehr als nur zwei Punkte bzw. Knoten gewählt werden und jedem dieser Punkte bzw. Knoten eine eigene Matrix N zugeordnet wird. Der Einfachheit halber wird in dem folgenden, stark vereinfachten Beispiel jedoch nur die Korrektur im Knoten $K_1$ als Korrektur der Verformung zwischen den Knoten $K_1$ und $K_2$ beschrieben.

Als Eingangsgrößen für die Berechnung dienen neben den von den Temperatursensoren 34, 36 erfassten Temperaturdaten thermoelastische Koeffizienten, die die Auswirkungen der Temperaturdaten auf die sechs Freiheitsgrade (drei translatorische Freiheitsgrade und rotatorische Freiheitsgrade), in den betrachteten Punkten $K_1$ und $K_2$ definieren. Mit Hilfe der thermoelastischen Koeffizienten werden, wie im Folgenden näher dargestellt ist, in jedem der Punkte $K_1$ und $K_2$ temperaturbedingte Zustandsänderungen tr in Schritt S101 berechnet. In vektorieller Schreibweise werden die Zustandsänderungen in jedem der Punkte bspw. wie folgt ausgedrückt:

$$tr = \begin{bmatrix} t_x \\ t_y \\ t_z \\ r_x \\ r_y \\ r_z \\ 0 \end{bmatrix} \qquad (1)$$

Dieser Zustandsvektor *tr* beinhaltet die translatorischen Verschiebungen t entlang der drei Achsen x, y und z sowie die rotatorischen Verdrehungen *r* um diese drei Achsen x, y und z.

Die Zustandsänderungen lassen sich in jedem der Punkte $K_1$ und $K_2$ wie folgt berechnen:

$$tr = N \bullet vdT \qquad (2)$$

wobei *N* eine thermoelastische Matrix ist, die die dem jeweiligen Punkt $K_1$ bzw. $K_2$ zugeordnete thermoelastische Koeffizienten aufweist, und wobei *vdT ein* Zustandsvektor ist, der mehrere Temperaturdifferenzen *dT* aufweist, die aus den von den Temperatursensoren 34, 36 gelieferten Temperaturdaten ermittelt werden.

Die für jeden Punkt $K_1$ und $K_2$ definierte thermoelastische Matrix *N* hat die Dimension m x n, wobei m der Anzahl an Freiheitsgraden entspricht, also sechs ist, und n der Anzahl an Temperaturdifferenzen entspricht. Die Anzahl n der aus den Temperaturdaten ermittelten Temperaturdifferenzen ist vorzugsweise gleichgroß oder größer wie die Anzahl an Temperatursensoren. Werden für die Berechnung bspw. sieben Temperaturdifferenzen verwendet, so ergibt sich folgende thermoelastische Matrix *N* und folgender Zustandsvektor *vdT:*

$$N = \begin{bmatrix} \frac{dt_x}{dT_1} & \frac{dt_x}{dT_2} & \frac{dt_x}{dT_3} & \frac{dt_x}{dT_4} & \frac{dt_x}{dT_5} & \frac{dt_x}{dT_6} & \frac{dt_x}{dT_7} \\ \frac{dt_y}{dT_1} & \frac{dt_y}{dT_2} & \frac{dt_y}{dT_3} & \frac{dt_y}{dT_4} & \frac{dt_y}{dT_5} & \frac{dt_y}{dT_6} & \frac{dt_y}{dT_7} \\ \frac{dt_z}{dT_1} & \frac{dt_z}{dT_2} & \frac{dt_z}{dT_3} & \frac{dt_z}{dT_4} & \frac{dt_z}{dT_5} & \frac{dt_z}{dT_6} & \frac{dt_z}{dT_7} \\ \frac{dr_x}{dT_1} & \frac{dr_x}{dT_2} & \frac{dr_x}{dT_3} & \frac{dr_x}{dT_4} & \frac{dr_x}{dT_5} & \frac{dr_x}{dT_6} & \frac{dr_x}{dT_7} \\ \frac{dr_y}{dT_1} & \frac{dr_y}{dT_2} & \frac{dr_y}{dT_3} & \frac{dr_y}{dT_4} & \frac{dr_y}{dT_5} & \frac{dr_y}{dT_6} & \frac{dr_y}{dT_7} \\ \frac{dr_z}{dT_1} & \frac{dr_z}{dT_2} & \frac{dr_z}{dT_3} & \frac{dr_z}{dT_4} & \frac{dr_z}{dT_5} & \frac{dr_z}{dT_6} & \frac{dr_z}{dT_7} \\ 0 & 0 & 0 & 0 & 0 & 0 & 0 \end{bmatrix} \qquad (3)$$

$$vdT = \begin{bmatrix} dT_1 \\ dT_2 \\ dT_3 \\ dT_4 \\ dT_5 \\ dT_6 \\ dT_7 \end{bmatrix} \qquad (4)$$

Es versteht sich, dass bei weniger oder mehr als sechs Temperaturdifferenzen *dT die* Matrix *N* und der Vektor *vdT* entsprechend erweitert und mit Nullen aufgefüllt werden müssen. Für das Beispiel von sieben Temperaturdifferenzen *dT* ergibt sich für jeden Punkt $K_1$ und $K_2$ somit folgende Gleichung (vgl. Gleichung (2) oben): Wobei der Vektor *tr* den Korrekturbeitrag des jeweiligen Punktes/Knotens $K_1$ bzw. $K_2$ für den aktuellen Zustandsvektor *vdT* beinhaltet.

$$\begin{bmatrix} t_x \\ t_y \\ t_z \\ r_x \\ r_y \\ r_z \\ 0 \end{bmatrix} = \begin{bmatrix} \frac{dt_x}{dT_1} & \frac{dt_x}{dT_2} & \frac{dt_x}{dT_3} & \frac{dt_x}{dT_4} & \frac{dt_x}{dT_5} & \frac{dt_x}{dT_6} & \frac{dt_x}{dT_7} \\ \frac{dt_y}{dT_1} & \frac{dt_y}{dT_2} & \frac{dt_y}{dT_3} & \frac{dt_y}{dT_4} & \frac{dt_y}{dT_5} & \frac{dt_y}{dT_6} & \frac{dt_y}{dT_7} \\ \frac{dt_z}{dT_1} & \frac{dt_z}{dT_2} & \frac{dt_z}{dT_3} & \frac{dt_z}{dT_4} & \frac{dt_z}{dT_5} & \frac{dt_z}{dT_6} & \frac{dt_z}{dT_7} \\ \frac{dr_x}{dT_1} & \frac{dr_x}{dT_2} & \frac{dr_x}{dT_3} & \frac{dr_x}{dT_4} & \frac{dr_x}{dT_5} & \frac{dr_x}{dT_6} & \frac{dr_x}{dT_7} \\ \frac{dr_y}{dT_1} & \frac{dr_y}{dT_2} & \frac{dr_y}{dT_3} & \frac{dr_y}{dT_4} & \frac{dr_y}{dT_5} & \frac{dr_y}{dT_6} & \frac{dr_y}{dT_7} \\ \frac{dr_z}{dT_1} & \frac{dr_z}{dT_2} & \frac{dr_z}{dT_3} & \frac{dr_z}{dT_4} & \frac{dr_z}{dT_5} & \frac{dr_z}{dT_6} & \frac{dr_z}{dT_7} \\ 0 & 0 & 0 & 0 & 0 & 0 & 0 \end{bmatrix} \cdot \begin{bmatrix} dT_1 \\ dT_2 \\ dT_3 \\ dT_4 \\ dT_5 \\ dT_6 \\ dT_7 \end{bmatrix} \qquad (5)$$

Die Auswerte- und Steuereinheit 32 kann ferner dazu eingerichtet sein, die temperaturbedingte Verformung der Führungsstruktur 30 unter mathematischer Einbeziehung eines kinematischen Modells der Führungsstruktur 30 zu berechnen (Schritt S102). Beispielsweise lässt sich hierfür das Denavit-Hartenberg-Modell verwenden, mit Hilfe dessen die Führungsstruktur 30 als mechanisches System modelliert wird, das aus mehreren starren Körpern, die über elastische Knoten $K_1$ und $K_2$ miteinander verbunden sind. Mit lokalen Hilfsfunktionen *Rx, Ry* und *Rz* werden Rotationsmatrizen für die Drehung um jeweils eine Achse erzeugt.

$$Rx = \begin{bmatrix} 1 & 0 & 0 \\ 0 & \cos(rx) & \sin(rx) \\ 0 & -\sin(rx) & \cos(rx) \end{bmatrix} \qquad (6)$$

$$Ry = \begin{bmatrix} \cos(ry) & 0 & -\sin(ry) \\ 0 & 1 & 0 \\ \sin(ry) & 0 & \cos(ry) \end{bmatrix} \qquad (7)$$

$$Rz = \begin{bmatrix} \cos(rz) & \sin(rz) & 0 \\ -\sin(rz) & \cos(rz) & 0 \\ 0 & 0 & 1 \end{bmatrix} \qquad (8)$$

Für die Verwendung als Knoten in einem Denavit-Hartenberg-Modell werden jetzt die Rotationen und Translationen in einer 4 x 4-Matrix $T_{44}$ beschrieben:

$$T_{44} = \begin{bmatrix} \cos(ry)\cos(rz) & \cos(rz)\sin(rx)\sin(ry) - \cos(rx)\sin(rz) & \sin(rx)\sin(rz) + \cos(rx)\cos(rz)\sin(ry) & tx \\ \cos(ry)\sin(rz) & \cos(rx)\cos(rz) + \sin(rx)\sin(ry)\sin(rz) & \cos(rx)\sin(ry)\sin(rz) - \cos(rz)\sin(rx) & ty \\ -\sin(ry) & \cos(ry)\sin(rx) & \cos(rx)\cos(ry) & tz \\ 0 & 0 & 0 & 1 \end{bmatrix} \quad (9)$$

Wendet man die oben genannte Berechnung der thermoelastischen Verformungen zusammen mit dem Denavit-Hartenberg-Modell auf das in Fig. 2a und 2b gezeigte Beispiel des Teils der Führungsstruktur 30 des Koordinatenmessgerätes 10 mit den beiden Drehachsen $A_1$ und $A_2$ an, so ergibt sich als Basissystem (Koordinatensystem $KS_1$ im ersten Knoten $K_1$) die folgende Einheitsmatrix $T_{a1}$:

$$T_{a1} = \begin{bmatrix} 1 & 0 & 0 & 0 \\ 0 & 1 & 0 & 0 \\ 0 & 0 & 1 & 0 \\ 0 & 0 & 0 & 1 \end{bmatrix} \quad (10)$$

Bei einer Drehung des Drehgelenks 20 aus der in Fig. 2a gezeigten ersten Stellung in die in Fig. 2b gezeigte zweite Stellung um 90° um die z-Achse ergibt sich aus der Matrix $T_{44}$ aus Gleichung (9) $T_{RA1}$ wie folgt:

$$T_{Ra1} = \begin{bmatrix} 0,0000 & -1,0000 & 0 & 0 \\ 1,0000 & 0,0000 & 0 & 0 \\ 0 & 0 & 1,0000 & 0 \\ 0 & 0 & 0 & 1,0000 \end{bmatrix} \quad (11)$$

Geht man in dem Beispiel ferner davon aus, dass der Abstand zwischen den beiden Knotenpunkten $K_1$ und $K_2$ bei 20 °C exakt 1000 mm beträgt und das Ortskoordinatensystem $KS_2$ im Knoten $K_2$, wie in Fig. 2a gezeigt, relativ zu dem Bezugskoordinatensystem $KS_1$ im Knoten $K_1$ 90° um die x-Achse gedreht ist, so ergibt sich für die Matrix $T_{44}$ durch entsprechendes Einsetzen der Werte in Gleichung (9) $T_{a2}$ wie folgt:

$$T_{a2} = 10^3 \begin{bmatrix} 0,0010 & 0 & 0 & 0 \\ 0 & 0,0000 & -0,0010 & 1,0000 \\ 0 & 0,0010 & 1,0000 & 0 \\ 0 & 0 & 0 & 0,0010 \end{bmatrix} \quad (12)$$

Für das hier gezeigte Beispiel wird ferner davon ausgegangen, dass der Auslegerarm 18 aus Aluminium ist und einen Temperaturausdehnungskoeffizienten b' von $22 \times 10^{-6}$ hat. Zudem werden drei Temperaturdifferenzen $dT_1$, $dT_2$ und $dT_3$ verwendet, die sich aus den von den beiden Temperatursensoren 34, 36 ermittelten Temperaturen $T_1$ und $T_2$ ergeben:

$$dT_1 = T_1 - 20°C$$

$$dT_2 = T_2 - 20°C$$

$$dT_3 = T_2 - T_1$$

Ferner wird davon ausgegangen, dass sich aus einer Kalibriermessung und entsprechender Optimierung ergeben hat, dass eine Temperaturdifferenz zwischen $T_1$ und $T_2$ von 1 °C eine Verkippung um die x-Achse von $5 \times 10^{-6}$ rad ergibt. Da die beiden Sensoren 34, 36 verwendet werden, wird die Längenausdehnung entlang der y-Achse auf die entsprechenden Werte $dt_y/dT_1$ und $dt_y/dT_2$ aufgeteilt und für $dr_x/dT_3$ oben genannter Wert für die temperaturabhängige Verkippung um die x-Achse verwendet, so dass sich folgende thermoelastische Matrix $N$ im Knotenpunkt $K_1$ ergibt:

$$N = \begin{bmatrix} 0 & 0 & 0 & 0 & 0 & 0 & 0 \\ 11 \bullet 10^{-3} & 11 \bullet 10^{-3} & 0 & 0 & 0 & 0 & 0 \\ 0 & 0 & 0 & 0 & 0 & 0 & 0 \\ 0 & 0 & 5 \bullet 10^{-6} & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix} \qquad (13)$$

Von der in Fig. 2a gezeigten ersten Stellung zu der in Fig. 2b gezeigten zweiten Stellung wurde das zweite Drehgelenk 28 ferner um -90° um die z-Achse des Ortskoordinatensystems $KS_2$ im zweiten Knotenpunkt $K_2$ gedreht. Aus Gleichung (9) ergibt sich somit ferner diese im Ortskoordinatensystem $KS_2$ beschriebene Drehung $A_2$ wie folgt:

$$T_{Ra2} = \begin{bmatrix} 0,0000 & 1,0000 & 0 & 0 \\ -1,0000 & 0,0000 & 0 & 0 \\ 0 & 0 & 1,0000 & 0 \\ 0 & 0 & 0 & 1,0000 \end{bmatrix} \qquad (14)$$

Die Tastkugel 26 ist in der in Fig. 2b gezeigten zweiten Stellung in z-Richtung des Ortskoordinatensystems $KS_2$ 100 mm beabstandet von dem Dreh- bzw. Knotenpunkt $K_2$ und ragt in y-Richtung 200 mm aus. Damit ergibt sich die Position der Tastkugel 26 im Ortskoordinatensystem wie folgt:

$$T_{tool} = \begin{bmatrix} 0,0000 & 1,0000 & 0 & 0 \\ -1,0000 & 0,0000 & 0 & 200,0000 \\ 0 & 0 & 1,0000 & 100,0000 \\ 0 & 0 & 0 & 1,0000 \end{bmatrix} \qquad (15)$$

Damit lässt sich insgesamt die Position der Tastkugel 26 in Basiskoordinaten (im Koordinatensystem $KS_1$) bei 20 °C (ohne thermoelastische Verformung) wie folgt berechnen:

$$T_{a1} \bullet T_{Ra1} \bullet T_{a2} \bullet T_{Ra2} \bullet T_{tool} = \begin{bmatrix} -0,0000 & 0,0000 & 1,0000 & -900,0000 \\ -1,0000 & 0,0000 & -0,0000 & 200,0000 \\ -0,0000 & -1,0000 & 0,0000 & 0,0000 \\ 0 & 0 & 0 & 1,0000 \end{bmatrix} \qquad (16)$$

Messen die Temperatursensoren 34, 36 bspw. nun nach einiger Zeit $T_1$ = 30 °C und $T_2$ = 31 °C, so ergibt sich folgender Zustandsvektor *vdT:*

$$vdT = \begin{bmatrix} 10 \\ 11 \\ 1 \end{bmatrix} \qquad (17)$$

Für die thermoelastische Verformung ergibt sich damit aus obiger Gleichung (2) bzw. aus der Multiplikation der thermoelastischen Matrix *N* aus Gleichung (13) mit dem Zustandsvektor *vdT* aus Gleichung (17) folgende Verschiebung und Verkippung:

$$r = \begin{bmatrix} 0 \\ 0,2310 \\ 0 \\ 0,0000 \\ 0 \\ 0 \\ 0 \end{bmatrix} \qquad (18)$$

Wie oben beschrieben wird daraus eine 4 x 4-Matrix berechnet:

$$T_{tempcorr} = \begin{bmatrix} 1,0000 & 0 & 0 & 0 \\ 0 & 1,0000 & -0,0000 & 0,2310 \\ 0 & 0,0000 & 1,0000 & 0 \\ 0 & 0 & 0 & 1,0000 \end{bmatrix} \qquad (19)$$

Damit kann die um die thermoelastische Verformung korrigierte Pose des Taststiftes 24 bei diesem Zustand berechnet werden:

$$T_{corrected} = T_{a1} \bullet T_{Ra1} \bullet T_{tempcorr} \bullet T_{a2} \bullet T_{Ra2} \bullet T_{tool} =$$

$$\begin{bmatrix} -0,0000 & -0,0000 & 1,0000 & -900,2310 \\ -1,0000 & 0,0000 & -0,0000 & 200,0000 \\ -0,0000 & -1,0000 & -0,0000 & 0,0045 \\ 0 & 0 & 0 & 1,0000 \end{bmatrix} \qquad (20)$$

Wie erwartet, ergibt sich eine deutliche Verschiebung in x-Richtung, da der Auslegerarm 18 länger geworden ist. Die Differenz ist 0,23 mm, was erwartet werden kann, da die mittlere Temperaturdifferenz 10,5 °C beträgt und die Länge des Auslegerarms in diesem Beispiel 1000 mm ist und der Temperaturausdehnungskoeffizient b' $22 \times 10^{-6}$ beträgt. Die Verkippung bewirkt eine leichte zusätzliche Verschiebung, wohingegen die Rotationsänderung nur bei anderer Darstellung sichtbar ist.

Die gesammelten Mess- und/oder Stellungsdaten lassen sich somit auf Basis der berechneten, temperaturbedingten Verformung entsprechend korrigieren (Schritt S103).

Es versteht sich, dass sich in dieser Art und Weise auch die temperaturbedingten Verformungen der übrigen Bauteile der Führungsstruktur 30 berechnen lassen. Insbesondere eignet sich dieses Verfahren für Strukturelemente wie z.B. die Säulen eines Portal-Koordinatenmessgeräts, auf denen die Traverse ruht oder auch für Arme eines Messroboters, der als Koordinatenmessgerät fungiert. So lässt sich auch das in Gleichung (16) respektive Gleichung (20) erweitert dargestellte kinematische Modell links erweitern um eine 4x4 Matrix, mit der die X-Position in der vierten Spalte der ersten Zeile variabel, und die Höhe der Säule als Z-Wert in der vierten Spalte der 3. Zeile fest steht. Die dargestellte Transformation mit 4x4 Matrizen wie sie auch mit dem Denavit-Hartenberg-Modell verwendet wird, ist dabei nur als Beispiel zu verstehen. Eine solche kinematische Kette kann selbstverständlich mit anderen gebräuchlichen Methoden wie zum Beispiel Quaternionen beschrieben werden. Die Korrekturwerte der Vektoren *tr* aus Gleichung (2) können für jeden relevanten Knoten mit bekannten Verfahren auch in diese Modelle transformiert werden.

Wenn dieses Verfahren zusätzlich für Führungskomponenten, z.B. einer Traverse eines Portal-Koordinatenmessgerätes, verwendet werden soll, so sind Teile oder alle Koeffizienten des jeweiligen Knotens von der Position des Führungsschlittens abhängig. In einem einfachen Fall kann z.B. für die x-Achse eines Koordinatenmessgerätes eine Tabelle mit m x-Positionen und m-Matrizen $N_i$ abgelegt werden. Während der Korrektur wird dann für die aktuelle x-Position durch Interpolation die geeignete Matrix für die Berechnung bestimmt.

Die Bestimmung der thermoelastischen Koeffizienten der Knoten kann durch Berechnung (z.B.: Länge x b') erfolgen. Die thermoelastischen Koeffizienten können alternativ oder teilweise auch durch Messung an Einzelgeräten oder einem Einzelgerät einer Baureihe erfolgen. Die thermoelastischen Koeffizienten können auch durch eine FEM-Simulation ermittelt werden. Besonders vorteilhaft ist es, bereits die Zahl, Genauigkeit und Position der Temperatursensoren für dieses Verfahren mit einem FEM-Modell zu berechnen. Dafür kann z.B. für die Position eine Sensitivitätsanalyse oder andere korrelative Verfahren eingesetzt werden.

Das FEM-Modell muss durch bekannte Verfahren mit dem realen Gerät abgeglichen werden. Das kann an einem Gerät einer Baureihe erfolgen. Die thermoelastischen Koeffizienten der ermittelten N-Matrizen werden dann auf alle Geräte der Baureihe aufgespielt. Der Abgleich kann auch an jedem Gerät individuell erfolgen. Alternativ oder zusätzlich können die Koeffizienten der Matrix individuell nachkalibriert werden. Dazu können z.B. bei mehreren Kinematik-Einmessungen (z.B. Portal-Koordinatenmessgerätbestimmung der Rechtwinkligkeitsabweichung und der Linearkorrekturwerte für die Einzelachse oder bei Messroboter mit Denavit-Hartenberg-Modell: Bestimmung der Vier-Denavit-Hartenberg-Parameter pro Achse) jeweils die ermittelten Änderungen und die bei den Einzelmessungen vorliegenden Temperaturzustände gespeichert werden. Um stabile Ergebnisse zu erzielen, kann dies auch durch gezielte Erzeugung von Temperaturgradienten (Erwärmung, etc.) und jeweiliger Wiederholung der Kinematik-Einmessung erfolgen.

Dadurch können einzelne oder auch alle thermoelastischen Koeffizienten der N-Matrizen optimiert werden. Dazu können bekannte Optimierungsverfahren (z.B. Newton-Verfahren) eingesetzt werden.

Die Berechnung der Messunsicherheit aus den bekannten Informationen kann bspw. über die Ermittlung des Residuums von Kalibrierrechnung erfolgen. Bei überbestimmten Gleichungssystemen ist eine Ermittlung einer exakten Lösung meist nicht möglich. Eine Annäherung an die exakte Lösung ist die Folge. Ferner kann die Ermittlung der Messunsicherheit auch durch eine Ermittlung der Messunsicherheit der einzelnen Temperatursensoren erfolgen. Aus den beschriebenen Einzelmessunsicherheiten kann eine Berechnung der Gesamtunsicherheit über die Fehlerfortpflanzung erfolgen. Zudem kann mit Hilfe des FEM-Modells eine Berechnung der Messunsicherheit durchgeführt werden. Dazu können FEM-Randbedingungen (Konvektion, Strahlung, ...) und Werkstoffschwankungen (Ausdehnungskoeffizient, Wärmekapazität, Wärmeleitfähigkeit) innerhalb von vorgegebenen Grenzen variiert und anschließend an eine erneute Ermittlung der thermoelastischen Koeffizienten der Matrix durchgeführt werden.

## Patentansprüche

1. Koordinatenmessgerät (10) zum dimensionellen Messen eines in einem Messvolumen des Koordinatenmessgeräts befindlichen Messobjekts (14), aufweisend:

   - ein Messkopf (22), der dazu eingerichtet ist, dimensionelle Messdaten des Messobjekts (14) zu erfassen;
   - eine Führungsstruktur (30), die dazu eingerichtet ist, den Messkopf (22) und/oder das Messobjekt (14) zu führen und in dem Messvolumen zu bewegen, wobei der Führungsstruktur (30) mindestens ein Messgeber zugeordnet ist, der dazu eingerichtet ist, Stellungsdaten der Führungsstruktur (30) zu erfassen, anhand derer sich eine Pose des Messkopfes (22) berechnen lässt;
   - mehrere Temperatursensoren (34, 36), die dazu eingerichtet sind, Temperaturdaten zu dem Messvolumen zu erfassen; und
   - einer Auswerte- und Steuereinheit (32), die dazu eingerichtet ist, die dimensionellen Messdaten und die Stellungsdaten zu verarbeiten und die dimensionellen Messdaten und/oder die Stellungsdaten anhand der Temperaturdaten zu korrigieren, indem an einer Vielzahl von definierten Punkten innerhalb des Messvolumens eine temperaturbedingte Verformung der Führungsstruktur (32) oder eine temperaturbedingte Verformung der Führungsstruktur (30) und des Messkopfes (22) berechnet wird, wobei bei der Berechnung für jeden der Vielzahl von definierten Punkten temperaturbedingte Zustandsänderungen anhand von thermoelastischen Koeffizienten berechnet werden, die die Auswirkungen der Temperaturdaten auf drei translatorische Freiheitsgrade und drei rotatorische Freiheitsgrade in dem jeweiligen Punkt definieren,

   **dadurch gekennzeichnet, dass** jedem der Vielzahl von definierten Punkten ein thermoelastischer Koeffizient pro Freiheitsgrad und Temperaturdifferenz, die aus den Temperaturdaten ermittelt wird, zugeordnet ist, und dass die Auswerte- und Steuereinheit (32) dazu eingerichtet ist, die temperaturbedingte Verformung der Führungsstruktur (30) unter mathematischer Einbeziehung eines kinematischen Modells der Führungsstruktur (30) zu berechnen, wobei das kinematische Modell die Führungsstruktur (30) als ein mechanisches System modelliert, das aus mehreren starren Körpern, die über jeweils einen elastischen Knoten ($K_1$, $K_2$) miteinander verbunden sind, aufgebaut ist, wobei die Knoten ($K_1$, $K_2$) des kinematischen Modells in den definierten Punkten angeordnet sind.

2. Koordinatenmessgerät nach Anspruch 1, wobei die Auswerte- und Steuereinheit (32) dazu eingerichtet ist, die Zustandsänderungen in jedem der Vielzahl von definierten Punkten mithilfe einer thermoelastischen Matrix (N) zu berechnen, die die thermoelastischen Koeffizienten enthält und die Dimension m x n hat, wobei m der Anzahl an Freiheitsgraden entspricht und n der Anzahl an Temperaturdifferenzen entspricht, oder wobei m der Anzahl an Temperaturdifferenzen entspricht und n der Anzahl an Freiheitsgraden entspricht.

3. Koordinatenmessgerät nach Anspruch 2, wobei die Auswerte- und Steuereinheit (32) dazu eingerichtet ist, die Zustandsänderungen in jedem der Vielzahl von definierten Punkten durch Multiplikation der dem jeweiligen Punkt entsprechenden thermoelastischen Matrix (N) mit einem Zustandsvektor (vdT) zu berechnen, der dem jeweiligen Punkt entsprechende, aus den Temperaturdaten ermittelte Temperaturdifferenzen aufweist, wobei eine Anzahl der in dem Zustandsvektor enthaltenen Temperaturdifferenzen größer oder gleich der Anzahl der Temperatursensoren (34, 36) ist.

4. Koordinatenmessgerät nach Anspruch 3, wobei die Temperaturdifferenzen jeweils (i) eine Differenz einer von einem der Temperatursensoren (34, 36) gemessenen Temperatur zu einer definierten Bezugstemperatur, (ii) eine Differenz einer von einem der Temperatursensoren (34, 36) gemessenen Temperatur zu einer von einem anderen der Temperatursensoren gemessenen Temperatur, (iii) einen zeitlichen Gradienten einer von einem der Temperatursensoren (34, 36) gemessenen Temperatur, (iv) einen zeitlichen Gradienten einer Differenz einer von einem der Temperatursensoren (34, 36) gemessenen Temperatur zu einer von einem anderen der Temperatursensoren (34, 36) gemessenen Temperatur, oder (v) einen gefilterten Wert eines von einem der Temperatursensoren (34, 36) gemessenen Temperatursignals aufweisen.

**5.** Koordinatenmessgerät nach einem der Ansprüche 2 bis 4, wobei die thermoelastische Matrix (N) weitere Werte aufweist, die aus einem Zustand und/oder einer Leistung einer oder mehrerer Wärmequellen abgeleitet sind.

**6.** Koordinatenmessgerät nach einem der Ansprüche 1-5, wobei das kinematische Modell mathematische Operatoren aufweist, die Rotationen und Translationen von in den Knoten ($K_1$, $K_2$) angeordneten Ortskoordinatensystemen als kinematische Kette definieren.

**7.** Koordinatenmessgerät nach Anspruch 6, wobei die mathematischen Operatoren Vektoren und/oder Matrizen aufweisen und die Auswerte- und Steuereinheit dazu eingerichtet, die Vektoren und/oder Matrizen mit der thermoelastischen Matrix zu multiplizieren.

**8.** Koordinatenmessgerät nach einem der Ansprüche 1 bis 7, wobei die Knoten ($K_1$, $K_2$) Teile der Führungsstruktur (30), insbesondere Verbindungsstellen von Bauteilen der Führungsstruktur (30), modellieren.

**9.** Verfahren zur Korrektur von dimensionellen Messdaten eines Koordinatenmessgeräts (10), das einen Messkopf (22) zur Erfassung der dimensionellen Messdaten, eine Führungsstruktur (30) zum Bewegen und Führen des Messkopfes (22) und mehrere Temperatursensoren (34, 36) zum Erfassen von Temperaturdaten aufweist, wobei der Führungsstruktur (30) mindestens ein Messgeber zugeordnet ist, der dazu eingerichtet ist, Stellungsdaten der Führungsstruktur (30) zu erfassen, anhand derer sich eine Pose des Messkopfes (22) berechnen lässt, wobei das Verfahren die folgenden Schritte aufweist:

- Berechnen einer temperaturbedingten Verformung der Führungsstruktur (30) oder eine temperaturbedingte Verformung der Führungsstruktur (30) und des Messkopfes (22) an einer Vielzahl von definierten Punkten innerhalb des Messvolumens, wobei bei der Berechnung für jeden der Vielzahl von definierten Punkten temperaturbedingte Zustandsänderungen anhand von thermoelastischen Koeffizienten berechnet werden, die die Auswirkungen der Temperaturdaten auf drei translatorische Freiheitsgrade und drei rotatorische Freiheitsgrade in dem jeweiligen Punkt definieren, und
- Korrigieren der dimensionellen Messdaten und/oder der Stellungsdaten auf Basis der temperaturbedingten Verformung der Führungsstruktur (30) oder der temperaturbedingten Verformung der Führungsstruktur (30) und des Messkopfes (22);

**dadurch gekennzeichnet, dass** jedem der Vielzahl von definierten Punkten ein thermoelastischer Koeffizient pro Freiheitsgrad und Temperaturdifferenz, die aus den Temperaturdaten ermittelt wird, zugeordnet ist, und die temperaturbedingte Verformung der Führungsstruktur (30) unter mathematischer Einbeziehung eines kinematischen Modells der Führungsstruktur (30) berechnet wird, wobei das kinematische Modell die Führungsstruktur (30) als ein mechanisches System modelliert, das aus mehreren starren Körpern, die über jeweils einen elastischen Knoten ($K_1$, $K_2$) miteinander verbunden sind, aufgebaut ist, wobei die Knoten ($K_1$, $K_2$) des kinematischen Modells in den definierten Punkten angeordnet sind.

**10.** Verfahren nach Anspruch 9, wobei die thermoelastischen Koeffizienten durch Berechnung anhand eines Wärmeausdehnungskoeffizienten eines Materials der Führungsstruktur (30) und/oder des Messkopfes (22), durch Messung von Verformungen der Führungsstruktur (30) und/oder des Messkopfes (22) unter mehreren Temperaturbedingungen und/oder mithilfe einer FEM-Simulation bestimmt werden.

**11.** Computerprogrammprodukt, das einen Softwarecode aufweist, der dazu eingerichtet ist, bei Ausführung auf einem Computer das Verfahren nach einem der Ansprüche 9 und 10 auszuführen.

**Claims**

**1.** Coordinate measuring machine (10) for dimensionally measuring a measurement object (14) situated in a measurement volume of the coordinate measuring machine, comprising:

- a measuring head (22) configured to capture dimensional measurement data of the measurement object (14);

- a guide structure (30) configured to guide the measuring head (22) and/or the measurement object (14) and to move same in the measurement volume, wherein the guide structure (30) is assigned at least one measuring transducer configured to capture position data of the guide structure (30), on the basis of which a pose of the measuring head (22) can be calculated;

- a plurality of temperature sensors (34, 36) configured to capture temperature data concerning the measurement volume; and

- an evaluation and control unit (32) configured to process the dimensional measurement data and the position data and to correct the dimensional measurement data and/or the position data on the basis of the temperature data by calculating a temperature-dictated deformation of the guide structure (32) or a temperature-dictated deformation of the guide structure (30) and of the measuring head (22) at a plurality of defined points within the measurement volume, wherein during the calculation for each of the plurality of defined points temperature-dictated state changes are calculated on the basis of thermoelastic coefficients which define the effects of the temperature data on three translational degrees of freedom and three rotational degrees of freedom at the respective point,

**characterized in that** each of the plurality of defined points is assigned one thermoelastic coefficient per degree of freedom and temperature difference determined from the temperature data, and **in that** the evaluation and control unit (32) is configured to calculate the temperature-dictated deformation of the guide structure (30) with the mathematical inclusion of a kinematic model of the guide structure (30), wherein the kinematic model models the guide structure (30) as a mechanical system constructed from a plurality of rigid bodies connected to one another via a respective elastic node ($K_1$, $K_2$), wherein the nodes ($K_1$, $K_2$) of the kinematic model are arranged at the defined points.

2. Coordinate measuring machine according to Claim 1, wherein the evaluation and control unit (32) is configured to calculate the state changes at each of the plurality of defined points with the aid of a thermoelastic matrix (N) containing the thermoelastic coefficients and having the dimensions m x n, wherein m corresponds to the number of degrees of freedom and n corresponds to the number of temperature differences, or wherein m corresponds to the number of temperature differences and n corresponds to the number of degrees of freedom.

3. Coordinate measuring machine according to Claim 2, wherein the evaluation and control unit (32) is configured to calculate the state changes at each of the plurality of defined points by multiplication of the thermoelastic matrix (N) corresponding to the respective point by a state vector (vdT) comprising temperature differences which correspond to the respective point and are determined from the temperature data, wherein a number of temperature differences contained in the state vector is greater than or equal to the number of temperature sensors (34, 36).

4. Coordinate measuring machine according to Claim 3, wherein the temperature differences each comprise (i) a difference between a temperature measured by one of the temperature sensors (34, 36) and a defined reference temperature, (ii) a difference between a temperature measured by one of the temperature sensors (34, 36) and a temperature measured by another of the temperature sensors, (iii) a temporal gradient of a temperature measured by one of the temperature sensors (34, 36), (iv) a temporal gradient of a difference between a temperature measured by one of the temperature sensors (34, 36) and a temperature measured by another of the temperature sensors (34, 36), or (v) a filtered value of a temperature signal measured by one of the temperature sensors (34, 36).

5. Coordinate measuring machine according to any of Claims 2 to 4, wherein the thermoelastic matrix (N) comprises further values derived from a state and/or a power of one or more heat sources.

6. Coordinate measuring machine according to any of Claims 1-5, wherein the kinematic model comprises mathematical operators which define rotations and translations of spatial coordinate systems arranged at the nodes ($K_1$, $K_2$) as a kinematic chain.

7. Coordinate measuring machine according to Claim 6, wherein the mathematical operators comprise vectors and/or matrices and the evaluation and control unit is configured to multiply the vectors and/or matrices by the thermoelastic matrix.

8. Coordinate measuring machine according to any of Claims 1 to 7, wherein the nodes ($K_1$, $K_2$) model parts of the guide structure (30), in particular connecting locations of components of the guide structure (30).

9. Method for correcting dimensional measurement data of a coordinate measuring machine (10) comprising a measuring head (22) for capturing the dimensional measurement data, a guide structure (30) for moving and guiding the

EP 4 124 821 B1

measuring head (22), and a plurality of temperature sensors (34, 36) for capturing temperature data, wherein the guide structure (30) is assigned at least one measuring transducer configured to capture position data of the guide structure (30), on the basis of which a pose of the measuring head (22) can be calculated, wherein the method comprises the following steps:

- calculating a temperature-dictated deformation of the guide structure (30) or a temperature-dictated deformation of the guide structure (30) and of the measuring head (22) at a plurality of defined points within the measurement volume, wherein during the calculation for each of the plurality of defined points temperature-dictated state changes are calculated on the basis of thermoelastic coefficients which define the effects of the temperature data on three translational degrees of freedom and three rotational degrees of freedom at the respective point, and
- correcting the dimensional measurement data and/or the position data on the basis of the temperature-dictated deformation of the guide structure (30) or the temperature-dictated deformation of the guide structure (30) and of the measuring head (22); **characterized in that** each of the plurality of defined points is assigned one thermoelastic coefficient per degree of freedom and temperature difference determined from the temperature data, and the temperature-dictated deformation of the guide structure (30) is calculated with the mathematical inclusion of a kinematic model of the guide structure (30), wherein the kinematic model models the guide structure (30) as a mechanical system constructed from a plurality of rigid bodies connected to one another via a respective elastic node ($K_1$, $K_2$), wherein the nodes ($K_1$, $K_2$) of the kinematic model are arranged at the defined points.

10. Method according to Claim 9, wherein the thermoelastic coefficients are determined by calculation on the basis of a coefficient of thermal expansion of a material of the guide structure (30) and/or of the measuring head (22), by measurement of deformations of the guide structure (30) and/or of the measuring head (22) under a plurality of temperature conditions and/or with the aid of an FEM simulation.

11. Computer program product comprising a software code configured, upon execution on a computer, to carry out the method according to either of Claims 9 and 10.

## Revendications

1. Appareil de mesure de coordonnées (10) destiné à la mesure dimensionnelle d'un objet à mesurer (14) qui se trouve dans un volume de mesure de l'appareil de mesure de coordonnées (10), comprenant :

- une tête de mesure (22), laquelle est conçue pour acquérir des données de mesure dimensionnelles de l'objet à mesurer (14) ;
- une structure de guidage (30), laquelle est conçue pour guider la tête de mesure et/ou l'objet à mesurer (14) et la/le déplacer dans le volume de mesure, au moins un transmetteur de mesure étant associé à la structure de guidage (30), lequel est conçu pour acquérir des données de position de la structure de guidage (30), à l'aide desquelles il est possible de calculer une posture de la tête de mesure (22) ;
- plusieurs capteurs de température (34, 36), lesquels sont conçus pour acquérir des données de température à propos du volume de mesure ; et
- une unité d'interprétation et de commande (32), laquelle est conçue pour traiter les données de mesure dimensionnelles et les données de position et pour corriger les données de mesure dimensionnelles et/ou les données de position à l'aide des données de température par le fait qu'une déformation liée à la température de la structure de guidage (32) ou une déformation liée à la température de la structure de guidage (30) et de la tête de mesure (22) est calculée en une pluralité de points définis à l'intérieur du volume de mesure, des changements d'état liés à la température étant calculés lors du calcul pour chacun de la pluralité de points définis à l'aide de coefficients thermoélastiques, qui définissent les effets des données de température sur trois degrés de liberté translatoires et trois degrés de liberté rotatoires dans le point respectif,

**caractérisé en ce qu'**un coefficient thermoélastique par degré de liberté et différence de température, laquelle est déterminée à partir des données de température, est associé à chacun de la pluralité de points définis, et **en ce que** l'unité d'interprétation et de commande (32) est conçue pour calculer la déformation liée à la température de la structure de guidage (30) en intégrant mathématiquement un modèle cinématique de la structure de guidage (30), le modèle cinématique de la structure de guidage (30) étant modélisé sous la forme d'un système mécanique qui est constitué de plusieurs corps rigides, lesquels sont reliés les uns aux autres respectivement par le biais d'un

noeud ($K_1$, $K_2$) élastique, les noeuds ($K_1$, $K_2$) du modèle cinématique étant disposés dans les points définis.

2. Appareil de mesure de coordonnées selon la revendication 1, l'unité d'interprétation et de commande (32) étant conçue pour calculer les changements d'état dans chacun de la pluralité de points définis à l'aide d'une matrice thermoélastique (N), qui contient les coefficients thermoélastiques et possède la dimension m x n, m correspondant au nombre de degrés de liberté et n correspondant au nombre de différences de température, ou m correspondant au nombre de différences de température et n correspondant au nombre de degrés de liberté.

3. Appareil de mesure de coordonnées selon la revendication 2, l'unité d'interprétation et de commande (32) étant conçue pour calculer les changements d'état dans chacun de la pluralité de points définis par multiplication de la matrice thermoélastique (N) correspondant au point respectif par un vecteur d'état (vdT), lequel présente les différences de température correspondant au point respectif et déterminées à partir des différences de température, un nombre des différences de température contenues dans le vecteur d'état étant supérieur ou égal au nombre de capteurs de température (34, 36).

4. Appareil de mesure de coordonnées selon la revendication 3, les différences de température présentant respectivement (i) une différence entre une température mesurée par l'un des capteurs de température (34, 36) et une température de référence définie, (ii) une différence entre une température mesurée par l'un des capteurs de température (34, 36) et une température mesurée par l'autre des capteurs de température, (iii) un gradient dans le temps d'une température mesurée par l'un des capteurs de température (34, 36), (iv) un gradient dans le temps d'une différence entre une température mesurée par l'un des capteurs de température (34, 36) et une température mesurée par l'autre des capteurs de température, ou (v) une valeur filtrée d'un signal de température mesuré par l'un des capteurs de température (34, 36).

5. Appareil de mesure de coordonnées selon l'une des revendications 2 à 4, la matrice thermoélastique (N) présentant des valeurs supplémentaires, qui sont dérivées d'un état et/ou d'une puissance d'une ou plusieurs sources de chaleur.

6. Appareil de mesure de coordonnées selon l'une des revendications 1 à 5, le modèle cinématique présentant des opérateurs mathématiques qui définissent les rotations et les translations de systèmes de coordonnées locales disposées dans les noeuds ($K_1$, $K_2$) sous la forme d'une chaîne cinématique.

7. Appareil de mesure de coordonnées selon la revendication 6, les opérateurs mathématiques présentant des vecteurs et/ou des matrices et l'unité d'interprétation et de commande étant conçue pour multiplier les vecteurs et/ou les matrices par la matrice thermoélastique.

8. Appareil de mesure de coordonnées selon l'une des revendications 1 à 7, les noeuds ($K_1$, $K_2$) modélisant des parties de la structure de guidage (30), notamment des points d'assemblage d'éléments structuraux de la structure de guidage (30).

9. Procédé de correction de données de mesure dimensionnelles d'un appareil de mesure de coordonnées (10), lequel possède une tête de mesure (22) destinée à acquérir les données de mesure dimensionnelles, une structure de guidage (30) destiné à déplacer et à guider la tête de mesure (22) et plusieurs capteurs de température (34, 36) destinés à acquérir des données de température, au moins un transmetteur de mesure étant associé à la structure de guidage (30), lequel est conçu pour acquérir des données de position de la structure de guidage (30), à l'aide desquelles il est possible de calculer une posture de la tête de mesure (22), le procédé présentant les étapes suivantes :

- calcul d'une déformation liée à la température de la structure de guidage (32) ou d'une déformation liée à la température de la structure de guidage (30) et de la tête de mesure (22) en une pluralité de points définis à l'intérieur du volume de mesure, des changements d'état liés à la température étant calculés lors du calcul pour chacun de la pluralité de points définis à l'aide de coefficients thermoélastiques, qui définissent les effets des données de température sur trois degrés de liberté translatoires et trois degrés de liberté rotatoires dans le point respectif, et
- correction des données dimensionnelles et/ou des données de position sur la base de la déformation liée à la température de la structure de guidage (32) ou de la déformation liée à la température de la structure de guidage (30) et de la tête de mesure (22) ;

**caractérisé en ce qu'**un coefficient thermoélastique par degré de liberté et différence de température, laquelle est déterminée à partir des données de température, est associé à chacun de la pluralité de points définis, et la déformation liée à la température de la structure de guidage (30) est calculée en intégrant mathématiquement un modèle cinématique de la structure de guidage (30), le modèle cinématique de la structure de guidage (30) étant modélisé sous la forme d'un système mécanique qui est constitué de plusieurs corps rigides, lesquels sont reliés les uns aux autres respectivement par le biais d'un noeud ($K_1$, $K_2$) élastique, les noeuds ($K_1$, $K_2$) du modèle cinématique étant disposés dans les points définis.

10. Procédé selon la revendication 9, les coefficients thermoélastiques étant déterminés par calcul à l'aide d'un coefficient de dilatation thermique d'un matériau de la structure de guidage (30) et/ou de la tête de mesure (22), par mesure de déformations de la structure de guidage (30) et/ou de la tête de mesure (22) sous plusieurs conditions de température et/ou à l'aide d'une simulation FEM.

11. Produit de programme informatique, lequel présente un code logiciel qui est conçu pour, lors de l'exécution sur un ordinateur, mettre en oeuvre un procédé selon l'une des revendications 9 et 10.

**Fig. 1**

**Fig. 2a**

**Fig. 2b**

| Temperaturdaten | Definieren einer Vielzahl von Punkten im Messvolumen | Thermoelastische Koeffizienten |
|---|---|---|

Temperaturbedingte Zustandsänderung in jedem der Punkte berechnen — S101

Berechnete Zustandsänderung mit kinematischem Modell verknüpfen — S102

Korrigieren der dimensionellen Messdaten und/oder der Stellungsdaten auf Basis der temperaturbedingten Verformung — S103

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19518268 A1
- DE 10006753 A1
- WO 0014474 A1
- US 2021191359 A1
- DE 10138138 A1
- US 2010299094 A1
- DE 202008007949 U1

**In der Beschreibung aufgeführte Nicht-Patentliteratur**

- **K. J. SCHALZ.** Thermo-Vollfehler-Korrektur für Koordinaten-Meßgeräte. *Feinwerktechnik & Messtechnik,* 1990, vol. 98, 10